# EUROPÄISCHE PATENTSCHRIFT

(11) **EP 3 943 360 B1**
(45) Veröffentlichungstag und Bekanntmachung des Hinweises auf die Patenterteilung: **10.04.2024**
(21) Anmeldenummer: 21186710.6
(22) Anmeldetag: 20.07.2021
(51) Int. Cl.: B61F 5/10, B61F 5/14, B60G 11/27

(54) **LUFTFEDERANORDNUNG UND FAHRWERK**
PNEUMATIC SPRING ASSEMBLY AND RUNNING GEAR
AGENCEMENT DE RESSORT PNEUMATIQUE ET CHÂSSIS

(30) Priorität: 23.07.2020 AT 506332020
(43) Veröffentlichungstag der Anmeldung: 26.01.2022
(73) Patentinhaber: Siemens Mobility Austria GmbH, 1210 Wien (AT)
(72) Erfinder: Dutzler, Andreas, 8010 Graz (AT); Karacsonyi, Imre, 8010 Graz (AT); Faethe, Tobias, 8073 Feldkirchen bei Graz (AT); Moser, Christian, 8042 Graz (AT)
(74) Vertreter: Siemens Patent Attorneys

(56) Entgegenhaltungen:
- EP-A1- 0 794 099
- WO-A1-95/18734
- DE-B1- 1 605 095
- JP-A- 2010 060 016
- US-A1- 2009 039 574

## Beschreibung

Die Erfindung betrifft eine Luftfederanordnung für Fahrzeuge, insbesondere für Schienenfahrzeuge, mit einer Luftfeder.

Luftfederbälge von Fahrzeugen, insbesondere von Schienenfahrzeugen, sind mechanisch stark belastete Bauteile. Insbesondere führen große Querbewegungen zu hohen mechanischen Spannungen in Cordgeweben der Luftfederbälge, wodurch verminderte Lebensdauern der Luftfederbälge verursacht werden können.

Aus dem Stand der Technik ist beispielsweise das AT 411 349 B bekannt, in welchem eine Federanordnung eines Schienenfahrzeugs beschrieben ist, welche als Sekundärfeder zwischen einem Fahrwerksrahmen und einem Wagenkasten vorgesehen sein kann. Es sind eine Hauptfeder und eine zu dieser in Reihenschaltung angeordnete Zusatzfeder vorgesehen, wobei die Hauptfeder als hydropneumatische Feder ausgebildet ist. Mittels der Federanordnung wird eine Niveauregulierung des Wagenkastens durchgeführt. Die Federanordnung weist eine progressive Federkennlinie auf, ihre Vertikalsteifigkeit ist gering.

Weiterhin beschreibt die EP 3 530 977 A1 eine Luftfeder für ein Schienenfahrzeug, welche mit einer Anordnung aus Notfedern gekoppelt ist. Diese Anordnung umfasst eine zentral angeordnete, vorgespannte Stahlfeder sowie um die Stahlfeder herum angeordnete Elastomerelemente.

Der genannte Ansatz weist in seiner bekannten Form den Nachteil auf, dass die Anordnung aus Notfedern nicht dazu ausgelegt ist, eine Entlastung der Luftfeder zu bewirken.

Ferner ist in der US 2009/0039574 A1 eine Federvorrichtung offenbart, bei welcher eine Luftfeder mit einer Elastomerfeder verbunden ist. Mittels der Elastomerfeder werden horizontale Auslenkungen der Luftfeder kompensiert, wodurch Montageflächen der Federvorrichtung im Wesentlichen parallel zueinander bleiben.

Darüber hinaus zeigt die EP 0 794 099 A1 ein Schienenfahrzeug, bei dem zwischen einem Wagenkasten und einem Fahrwerk eine Luftfeder angeordnet ist. Zwischen der Luftfeder und dem Fahrwerk ist zur Verbesserung einer Querfedercharakteristik des Schienenfahrzeugs eine Rolleinrichtung angeordnet.

In der WO 95/18734 A1 ist eine Abstützvorrichtung für Schienenfahrzeuge beschrieben, welche eine Gasfeder und eine Kalottenfeder, welche an einem oberen Ende der Gasfeder angeordnet ist, umfasst.

Weiterhin offenbart die JP 2010 060016 A eine Luftfeder, welche mit einer Schichtfeder verbunden ist.

Der Erfindung liegt daher die Aufgabe zugrunde, eine gegenüber dem Stand der Technik weiterentwickelte Luftfederanordnung mit einer Luftfederbalg-Entlastungsvorrichtung anzugeben.

Erfindungsgemäß wird diese Aufgabe gelöst mit einer Luftfederanordnung der eingangs genannten Art, bei welcher mit der Luftfeder zumindest ein erstes Kippelement verbunden ist, wobei das zumindest erste Kippelement als Kippgelenk ausgebildet ist, und wobei das Kippgelenk zumindest ein federndes Rückstellelement aufweist, wobei mit dem zumindest ersten Kippelement ein zweites Kippelement, welches als Kippfeder ausgebildet ist, verbunden ist, wobei die Kippfeder als Elastomer-Metallfeder ausgeführt ist, welche Bogenformzwischenbleche mit in Richtung einer Längsachse, zu der Luftfeder hin, zunehmenden Krümmungen aufweist, und/oder welche V-Formzwischenbleche mit in Richtung der Längsachse, zu der Luftfeder hin, zunehmenden Neigungen bezüglich einer ersten Querachse aufweist, wodurch das zumindest erste Kippelement Querbewegungen der Luftfeder entgegengesetzt kippend ist.

Bei den Querbewegungen der Luftfeder bewegen sich Punkte des ersten Kippelements auf einer gedachten, gekrümmten Bahn. Bewegungsanteile derartiger Bewegungen der Punkte des ersten Kippelements parallel zu einer Querachse der Luftfeder sind dabei den Querbewegungen der Luftfeder entgegengerichtet. Dadurch werden mechanische Spannungen in einem Luftfederbalg reduziert und es wird die Luftfeder entlastet. Es wird dadurch entweder eine Lebensdauerverlängerung der Luftfeder erzielt oder eine Möglichkeit bewirkt, die Luftfeder kompakter zu dimensionieren bzw. ein geringes Bauraumbudget besser zu nutzen, die Luftfeder stärker auszulenken oder einen größeren Luftdruck im Inneren des Luftfederbalgs zuzulassen.

Durch das Rückstellelement werden ferner eine geringe bzw. eine bedarfsorientierte Kippsteifigkeit sowie reversible Auslenkungen bewirkt.

Durch die Kippfeder wird weiterhin eine gezielte Einstellung und Abstimmung der Kippsteifigkeit erreicht.

Durch diese Maßnahme wird weiterhin eine vorteilhafte Einstellung von Steifigkeiten der Kippfeder erreicht, wobei ein Steifigkeitsverlauf erzielt wird, welcher eine Biegelinie zumindest des ersten Kippelements in Bezug auf zu erreichende Gegenkippeffekte günstig beeinflusst.

Geschilderte Gegenkippbewegungen des ersten Kippelements können durch verschiedene Maßnahmen günstig beeinflusst werden.

In diesem Zusammenhang erhält man eine vorteilhafte Ausgestaltung, wenn ein Luftfederkraftangriffspunkt von einem Luftfederanordnungsschubmittelpunkt in Richtung der Längsachse, zu dem zumindest ersten Kippelement hin, beabstandet angeordnet ist.

Hilfreich ist es dabei auch, wenn eine erste Quersteifigkeit zumindest des ersten Kippelements in Abhängigkeit von geometrischen Eigenschaften der Luftfeder gewählt ist.

Eine günstige Lösung im Hinblick auf den Luftfederbalg besonders stark entlastende Gegenkippeffekte wird erzielt, wenn ein Kippelement-Schubmittelpunkt in einem Luftfederbalg-Schubmittelpunkt angeordnet ist.

Ferner ist es günstig, wenn eine Biegelinie zumindest des ersten Kippelements einen Wendepunkt aufweist.

Durch diese Maßnahmen werden rotatorische Abweichungen einer Luftfederfelge von einer Lotrechten, welche die Luftfeder belasten, vermindert.

Sind hohe Anforderungen zur Nutzung eines begrenzten Bauraumbudgets in einem Fahrzeug gestellt, so ist es hilfreich, wenn das zumindest erste Kippelement unterhalb der Luftfeder angeordnet ist und das zweite Kippelement oberhalb der Luftfeder angeordnet ist.

Zur Vermeidung spezieller und konstruktiv aufwendiger Sonderlösungen für die Kippfeder kann es von Vorteil sein, wenn die Kippfeder als Konusfeder ausgebildet ist.

Eine günstige Lösung wird erzielt, wenn die Kippfeder als Notfeder zu der Luftfeder eingesetzt ist.

Durch diese Maßnahme erfüllt die Kippfeder einerseits eine Entlastungsfunktion in Bezug auf die Luftfeder und andererseits eine Notfederungsfunktion eines Fahrzeugs bei beispielsweise aufgrund einer Leckage des Luftfederbalgs inaktiver Luftfeder.

Darüber hinaus bezieht sich die Erfindung auch auf ein Fahrwerk für ein Schienenfahrzeug mit zumindest einer erfindungsgemäßen Luftfederanordnung, wobei zumindest ein erstes Kippelement der zumindest einen Luftfederanordnung mit einem Fahrwerksrahmen verbunden ist.

Nachfolgend wird die Erfindung anhand von Ausführungsbeispielen näher erläutert.

Es zeigen beispielhaft:
- Fig. 1:: Einen Seitenriss einer beispielhaften ersten Ausführungsvariante einer nicht erfindungsgemäßen Luftfederanordnung in geschnittener Darstellung mit einem elastischen, sphärischen Gelenk als erstem Kippelement,
- Fig. 2:: Einen Seitenriss einer beispielhaften zweiten Ausführungsvariante einer erfindungsgemäßen Luftfederanordnung in geschnittener Darstellung mit einem elastischen, sphärischen Gelenk als erstem Kippelement und einer Konusfeder als zweitem Kippelement,
- Fig. 3:: Einen Seitenriss einer beispielhaften dritten Ausführungsvariante einer erfindungsgemäßen Luftfederanordnung in geschnittener Darstellung mit einem elastischen, sphärischen Gelenk als erstem Kippelement, einer ersten Konusfeder als zweitem Kippelement und einer zweiten Konusfeder als drittem Kippelement, wobei die erste Konusfeder unterhalb und die zweite Konusfeder oberhalb eines mittleren Bereichs einer Luftfeder angeordnet ist, und
- Fig. 4:: Einen schematischen Seitenriss der beispielhaften zweiten Ausführungsvariante einer erfindungsgemäßen Luftfederanordnung in ausgelenktem Zustand in Verbindung mit einer beispielhaften Ausführungsvariante eines erfindungsgemäßen Fahrwerks.

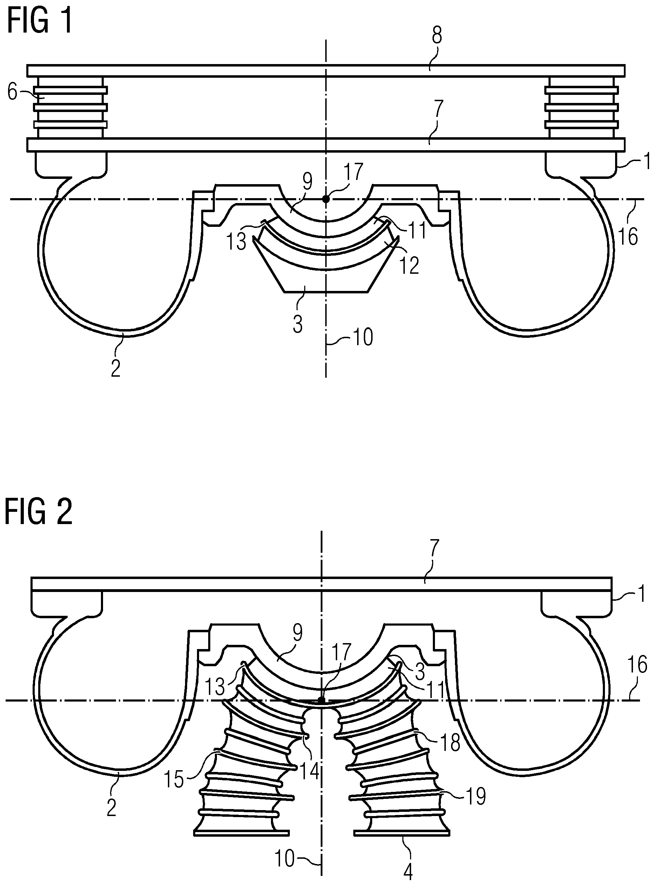

Fig. 1 zeigt einen Seitenriss einer beispielhaften ersten

Ausführungsvariante einer nicht erfindungsgemäßen Luftfederanordnung eines Schienenfahrzeugs in geschnittener Darstellung. Diese erste Ausführungsvariante dient nur der Veranschaulichung.

Die Luftfederanordnung gemäß Fig. 1 weist eine Luftfeder 1 mit einem Luftfederbalg 2, ein als Kippgelenk ausgeführtes erstes Kippelement 3, eine ringförmige, zylindrische Schichtfeder 6 sowie eine metallische erste Platte 7 und eine metallische zweite Platte 8 auf.

Der Luftfederbalg 2 ist als Halbbalg in Elastomer mit verstärkendem Cord-Gewebe ausgebildet.

Das erste Kippelement 3 ist als elastisches, sphärisches Gelenk ausgeführt und weist einen kugelsegmentförmigen Gelenkkopf 9 auf, welcher auch als Teil einer Felge der Luftfeder 1 fungiert. Dabei handelt es sich um eine günstige Lösung. Es ist es jedoch auch vorstellbar, das erste Kippelement 3 beispielsweise als Gleitlager, Axialgelenklager oder Kugelgelenk etc. auszubilden. Weiterhin ist es vorstellbar, dass das erste Kippelement 3, d.h. das Kippgelenk, beispielsweise als Halbzylindergelenk mit einer Vorzugskippachse parallel zu einer Fahrzeugquerachse ausgebildet ist, wodurch das Kippgelenk eine Vorzugskipprichtung bezüglich der Vorzugskippachse und somit einen geringen Widerstand gegen Kippbewegungen um die Vorzugskippachse aufweist.

Die erste Platte 7 ist der Luftfeder 1 und der Schichtfeder 6 zwischengeordnet.

Die zweite Platte 8 begrenzt eine Oberseite der Schichtfeder 6, welche oberhalb der Luftfeder 1 angeordnet ist, und ist mit einer in Fig. 1 nicht gezeigten Wagenkastenunterseite des Schienenfahrzeugs verbunden.

Das erste Kippelement 3 ist unterhalb eines mittleren Bereichs des Luftfederbalgs 2 angeordnet und über den Gelenkkopf 9 mit dem Luftfederbalg 2 verbunden. Über eine Unterseite des ersten Kippelements 3 ist dieses mit einem in Fig. 1 nicht dargestellten Fahrwerk des Schienenfahrzeugs verbunden.

Das erste Kippelement 3 und die Luftfeder 1 sind bezüglich einer Längsachse 10 der Luftfederanordnung in Serienschaltung zueinander angeordnet. Es sind jedoch auch Parallelschaltungen etc. denkbar.

Das erste Kippelement 3 weist unterhalb des Gelenkkopfs 9 und mit diesem verbunden eine erste Elastomerschicht 11 und eine zweite Elastomerschicht 12 auf, welche als federnde Rückstellelemente des ersten Kippelements 3 fungieren und welchen ein über die erste Elastomerschicht 11 mit dem Gelenkkopf 9 verbundenes Formblech, welches als erstes Bogenformzwischenblech 13 ausgebildet ist, zwischengeordnet ist.

Es ist es auch denkbar, dass das Formblech beispielsweise gerade oder V-förmig ausgebildet ist oder Teile, welche V-förmig angeordnet sind, umfasst etc.

Eine erste Quersteifigkeit des ersten Kippelements 3 ist größer ist als eine zweite Quersteifigkeit der Luftfeder 1.

Dabei handelt es sich um eine für die erste Ausführungsvariante einer nicht erfindungsgemäßen Luftfederanordnung günstige Ausführung. Wesentlich ist, dass die erste Quersteifigkeit in Abhängigkeit von geometrischen Eigenschaften der Luftfeder gewählt ist.

Führt die Luftfeder 1 eine Querbewegung, d.h. eine Bewegung in Richtung einer ersten Querachse 16 der Luftfederanordnung bzw. in einer von der ersten Querachse 16 und einer in Fig. 1 projizierend erscheinenden zweiten Querachse 17 der Luftfederanordnung gebildeten Querebene, aus, so bewegen sich Punkte des Gelenkkopfes 9 des ersten Kippelements 3 auf einer gedachten, gekrümmten Bahn, wobei Bewegungsanteile in Richtung der ersten Querachse 16 bzw. in der Querebene den Querbewegungen der Luftfeder 1 entgegengerichtet sind.

Das erste Kippelement 3 kippt also entgegengesetzt zu der Querbewegung der Luftfeder 1.

Es ist es auch vorstellbar, dass das erste Kippelement 3 mit dem Gelenkkopf 9 um 180° bezüglich der zweiten Querachse 17 verdreht angeordnet ist. Es sind für das erste Kippelement 3 verschiedene Anordnungen und Ausrichtungen denkbar, wodurch ein Druckpunkt bezüglich Kippbewegungen aufgrund von Querkräften 20 des ersten Kippelements 3 eingestellt und angepasst werden kann.

In Fig. 2 ist ein Seitenriss einer beispielhaften zweiten Ausführungsvariante einer erfindungsgemäßen Luftfederanordnung in geschnittener Darstellung offenbart. Die Luftfederanordnung gemäß Fig. 2 weist eine Luftfeder 1 mit einem Luftfederbalg 2, ein als Kippgelenk ausgeführtes erstes Kippelement 3, ein als Kippfeder ausgebildetes zweites Kippelement 4 sowie eine metallische erste Platte 7 auf.

Der Luftfederbalg 2 ist als Halbbalg in Elastomer mit verstärkendem Cord-Gewebe ausgebildet.

Das erste Kippelement 3, welches als elastisches, sphärisches Gelenk ausgebildet ist, weist einen kugelsegmentförmigen Gelenkkopf 9 auf, welcher auch als Teil einer Felge der Luftfeder 1 fungiert.

Die erste Platte 7 begrenzt eine Oberseite der Luftfeder 1 und ist mit einer in Fig. 2 nicht dargestellten Wagenkastenunterseite des Schienenfahrzeugs verbunden.

Das erste Kippelement 3 ist unterhalb eines mittleren Bereichs des Luftfederbalgs 2 angeordnet und über den Gelenkkopf 9 mit dem Luftfederbalg 2 verbunden.

Das erste Kippelement 3 weist unterhalb des Gelenkkopfs 9 eine erste Elastomerschicht 11 auf, an welche ein erstes Bogenformzwischenblech 13 angrenzend angeordnet ist.

Über das erste Bogenformzwischenblech 13 ist das erste Kippelement 3 mit der Kippfeder, welche als Konusfeder ausgeführt ist, verbunden.

Die Kippfeder, d.h. das zweite Kippelement 4, fungiert als Notfeder der Luftfederanordnung und federt das Schienenfahrzeug bei einem Ausfall der Luftfeder 1 (z.B. aufgrund einer Leckage des Luftfederbalgs 2).

Das zweite Kippelement 4 ist unterhalb des ersten Kippelements 3 angeordnet.

Über eine Unterseite des zweiten Kippelements 4 ist dieses mit einem in Fig. 2 nicht gezeigten Fahrwerk des Schienenfahrzeugs verbunden.

Das erste Kippelement 3, das zweite Kippelement 4 und die Luftfeder 1 sind bezüglich einer Längsachse 10 der Luftfederanordnung in Serienschaltung zueinander angeordnet. Im Verbund weisen das erste Kippelement 3 und das zweite Kippelement 4 eine erste Quersteifigkeit auf, welche größer als eine zweite Quersteifigkeit der Luftfeder 1 ist.

Das zweite Kippelement 4 ist als Elastomer-Metallfeder ausgeführt, welche Bogenformzwischenbleche sowie V-Formzwischenbleche, ein zweites Bogenformzwischenblech 14 und weitere Bogenformzwischenbleche sowie ein erstes V-Formzwischenblech 18 und weitere V-Formzwischenbleche, aufweist.

Die Bogenformzwischenbleche weisen in Richtung der Längsachse 10, nach oben, zu der Luftfeder 1 hin, zunehmende Krümmungen auf, die V-Formzwischenbleche in Richtung der Längsachse 10, nach oben, zu der Luftfeder 1 hin, zunehmende Neigungen bezüglich einer ersten Querachse 16 der Luftfederanordnung. Beispielsweise weist das zweite Bogenformzwischenblech 14 eine größere Krümmung auf als ein drittes Bogenformzwischenblech 15.

Weiterhin weist z. B. das erste V-Formzwischenblech 18 größere Neigungen bezüglich der ersten Querachse 16 auf als ein zweites V-Formzwischenblech 19.

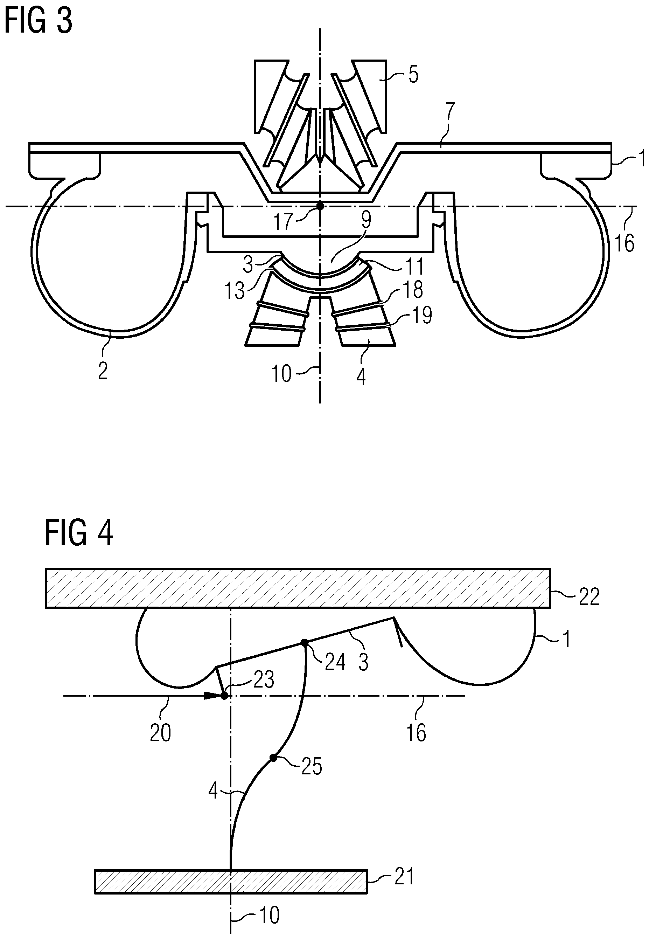

Wirkt auf die Luftfederanordnung eine in Fig. 4 beispielhaft dargestellte Querkraft 20, d.h. eine Kraft in Richtung der ersten Querachse 16 bzw. in einer von der ersten Querachse 16 und einer in Fig. 2 projizierend erscheinenden zweiten Querachse 17 der Luftfederanordnung gebildeten Querebene, so führt die Luftfeder 1 eine Querbewegung, d.h. eine Bewegung in Richtung der ersten Querachse 16 bzw. in der Querebene, aus.

Punkte des Gelenkkopfes 9 des ersten Kippelements 3 bewegen sich dabei auf einer gedachten, gekrümmten Bahn, wobei Bewegungsanteile in Richtung der ersten Querachse 16 bzw. in der Querebene der Querbewegung der Luftfeder 1 entgegengerichtet sind.

Das erste Kippelement 3 kippt im Verbund mit dem zweiten Kippelement 4 entgegengesetzt zu der Querbewegung der Luftfeder 1.

Erfindungsgemäß ist es auch vorstellbar, dass das erste Kippelement 3 mit dem Gelenkkopf 9 und das zweite Kippelement 4 um 180° bezüglich der zweiten Querachse 17 verdreht angeordnet sind. Erfindungsgemäß sind für das erste Kippelement 3 und das zweite Kippelement 4 verschiedene Anordnungen und Ausrichtungen denkbar, wodurch ein Druckpunkt bezüglich Kippbewegungen aufgrund von Querkräften 20 des ersten Kippelements 3 und des zweiten Kippelements 4 eingestellt und angepasst werden kann.

Fig. 3 zeigt einen Seitenriss einer beispielhaften dritten Ausführungsvariante einer erfindungsgemäßen Luftfederanordnung eines Schienenfahrzeugs.

Diese beispielhafte dritte Ausführungsvariante ist konstruktiv und funktionell ähnlich wie jene beispielhafte zweite Ausführungsvariante einer erfindungsgemäßen Luftfederanordnung ausgeführt, die in Fig. 2 dargestellt ist. Es werden daher in Fig. 3 teilweise gleiche Bezugszeichen wie in Fig. 2 verwendet.

Unterhalb eines mittleren Bereichs einer Luftfeder 1 sind ein als elastisches Kippgelenk ausgebildetes erstes Kippelement 3 sowie ein als elastische Kippfeder ausgeführtes zweites Kippelement 4 angeordnet.

Das Kippgelenk ist als sphärisches Gelenk, die Kippfeder als erste Konusfeder ausgeführt.

Das erste Kippelement 3 ist mit der Luftfeder 1 und mit dem zweiten Kippelement 4 verbunden. Das zweite Kippelement 4 ist mit einem in Fig. 3 nicht gezeigten Fahrwerk des Schienenfahrzeugs gekoppelt.

Im Unterschied zu jener beispielhaften zweiten Ausführungsvariante einer erfindungsgemäßen Luftfederanordnung von Fig. 2 weist das zweite Kippelement 4 gemäß Fig. 3 keine Bogenformzwischenbleche, sondern ausschließlich V-Formzwischenbleche auf. Es sind ein erstes V-Formzwischenblech 18 und ein zweites V-Formzwischenblech 19 vorgesehen, wobei das zweite V-Formzwischenblech 19 flacher in Bezug auf eine erste Querachse 16 der Luftfederanordnung ausgerichtet ist als das erste V-Formzwischenblech 18.

Im Unterschied zu der beispielhaften zweiten Ausführungsvariante einer erfindungsgemäßen Luftfederanordnung weist die Luftfederanordnung gemäß Fig. 3 weiterhin ein als Kippfeder ausgebildetes drittes Kippelement 5 auf, welches oberhalb der Luftfeder 1 angeordnet ist. Eine Unterseite des dritten Kippelements 5 ist mit einer ersten Platte 7 verbunden, welche die Luftfeder 1 nach oben hin abgrenzt. Das dritte Kippelement 5 ist in einer Vertiefung der ersten Platte 7 angeordnet.

Eine Oberseite des dritten Kippelements 5 ist mit einer in Fig. 3 nicht gezeigten Wagenkastenunterseite verbunden.

Das dritte Kippelement 5 ist als zweite Konusfeder ausgeführt.

In Fig. 4 ist ein Seitenriss jener beispielhaften zweiten Ausführungsvariante einer erfindungsgemäßen Luftfederanordnung eines Schienenfahrzeugs gezeigt, die auch in Fig. 2 dargestellt ist.

Eine Luftfeder 1 ist mit einem als elastisches Kippgelenk ausgeführten ersten Kippelement 3 und einem als elastische Kippfeder ausgebildeten zweiten Kippelement 4 verbunden.

Das erste Kippelement 3 und das zweite Kippelement 4 sind an einer ersten Unterseite bzw. unterhalb eines mittleren Bereichs der Luftfeder 1 angeordnet. Das erste Kippelement 3 ist über dessen erste Oberseite mit der Luftfeder 1 und über dessen zweite Unterseite mit dem zweiten Kippelement 4 verbunden. Das zweite Kippelement 4 ist über dessen dritte Unterseite mit einem Fahrwerksrahmen 21 eines Fahrwerks des Schienenfahrzeugs gekoppelt.

Eine zweite Oberseite der Luftfeder 1 ist mit einem Wagenkasten 22 des Schienenfahrzeugs verbunden.

Die Luftfederanordnung ist gemäß Fig. 4 in einem lateral ausgelenkten Zustand.

Auf die Luftfederanordnung wirkt eine Querkraft 20, wobei ein Luftfederkraftangriffspunkt 23 von einem Luftfederanordnungsschubmittelpunkt 24 entlang einer Längsachse 10 der Luftfederanordnung, in Richtung eines Verbunds aus dem ersten Kippelement 3 und dem zweiten Kippelement 4, beabstandet angeordnet ist.

Der Luftfederkraftangriffspunkt 23 ist unterhalb des Luftfederanordnungsschubmittelpunkts 24 angeordnet.

Ein Kippelement-Schubmittelpunkt des Verbunds aus dem ersten Kippelement 3 und dem zweiten Kippelement 4 ist in einem Luftfederbalg-Schubmittelpunkt, nämlich in dem Luftfederanordnungsschubmittelpunkt 24, angeordnet.

Eine Biegelinie des Verbunds aus dem ersten Kippelement 3 und dem zweiten Kippelement 4 weist einen Wendepunkt 25 auf.

In dem in Fig. 4 gezeigten Zustand ist die Luftfeder 1 aufgrund der Querkraft 20 in Richtung einer ersten Querachse 16 der Luftfederanordnung ausgelenkt.

Bei einer derartigen Auslenkung der Luftfeder 1 bewegen sich Punkte des ersten Kippelements 3 auf einer gedachten, gekrümmten Bahn, wobei Bewegungsanteile dieser Punkte parallel zu der ersten Querachse 16 gegen die Auslenkung der Luftfeder 1 gerichtet sind.

Das erste Kippelement 3 kippt entgegengesetzt zu Querbewegungen der Luftfeder 1. In jener in Fig. 4 gezeigten, beispielhaften Darstellung ist die Luftfeder 1 in Bezug auf die Längsachse 10 nach rechts ausgelenkt, das erste Kippelement 3 ist, relativ zu der Auslenkung der Luftfeder 1, nach links unten verkippt.

### Liste der Bezeichnungen

- 1: Luftfeder
- 2: Luftfederbalg
- 3: Erstes Kippelement
- 4: Zweites Kippelement
- 5: Drittes Kippelement
- 6: Schichtfeder
- 7: Erste Platte
- 8: Zweite Platte
- 9: Gelenkkopf
- 10: Längsachse
- 11: Erste Elastomerschicht
- 12: Zweite Elastomerschicht
- 13: Erstes Bogenformzwischenblech
- 14: Zweites Bogenformzwischenblech
- 15: Drittes Bogenformzwischenblech
- 16: Erste Querachse
- 17: Zweite Querachse
- 18: Erstes V-Formzwischenblech
- 19: Zweites V-Formzwischenblech
- 20: Querkraft
- 21: Fahrwerksrahmen
- 22: Wagenkasten
- 23: Luftfederkraftangriffspunkt
- 24: Luftfederanordnungsschubmittelpunkt
- 25: Wendepunkt

## Patentansprüche

1. Luftfederanordnung für Fahrzeuge, insbesondere für Schienenfahrzeuge, mit einer Luftfeder, wobei mit der Luftfeder (1) zumindest ein erstes Kippelement (3) verbunden ist, wobei das zumindest erste Kippelement (3) als Kippgelenk ausgebildet ist, und wobei das Kippgelenk zumindest ein federndes Rückstellelement aufweist, **dadurch gekennzeichnet, dass** mit dem zumindest ersten Kippelement (3) ein zweites Kippelement (4), welches als Kippfeder ausgebildet ist, verbunden ist, wobei die Kippfeder als Elastomer-Metallfeder ausgeführt ist, welche Bogenformzwischenbleche mit in Richtung einer Längsachse (10), zu der Luftfeder (1) hin, zunehmenden Krümmungen aufweist, und/oder welche V-Formzwischenbleche mit in Richtung der Längsachse (10), zu der Luftfeder (1) hin, zunehmenden Neigungen bezüglich einer ersten Querachse (16) aufweist, wodurch das zumindest erste Kippelement (3) Querbewegungen der Luftfeder (1) entgegengesetzt kippend ist.

2. Luftfederanordnung nach Anspruch 1, **dadurch gekennzeichnet, dass** das Kippgelenk als sphärisches Gelenk ausgebildet ist.

3. Luftfederanordnung nach Anspruch 1, **dadurch gekennzeichnet, dass** das Kippgelenk eine Vorzugskipprichtung aufweist.

4. Luftfederanordnung nach einem der Ansprüche 1 bis 3, **dadurch gekennzeichnet, dass** das zumindest eine Rückstellelement als erste Elastomerschicht (11) ausgebildet ist, welche mit einem Gelenkkopf (9) des zumindest ersten Kippelements (3) verbunden ist.

5. Luftfederanordnung nach einem der Ansprüche 1 bis 4, **dadurch gekennzeichnet, dass** zumindest ein Formblech mit einem Gelenkkopf (9) des zumindest ersten Kippelements (3) verbunden ist.

6. Luftfederanordnung nach einem der Ansprüche 1 bis 5,
**dadurch gekennzeichnet, dass** ein Luftfederkraftangriffspunkt (23) von einem Luftfederanordnungsschubmittelpunkt (24) in Richtung der Längsachse (10), zu dem zumindest ersten Kippelement (3) hin, beabstandet angeordnet ist.

7. Luftfederanordnung nach einem der Ansprüche 1 bis 6,
**dadurch gekennzeichnet, dass** eine erste Quersteifigkeit zumindest des ersten Kippelements (3) in Abhängigkeit von geometrischen Eigenschaften der Luftfeder (1) gewählt ist.

8. Luftfederanordnung nach einem der Ansprüche 1 bis 7,
**dadurch gekennzeichnet, dass** ein Kippelement-Schubmittelpunkt in einem Luftfederbalg-Schubmittelpunkt angeordnet ist.

9. Luftfederanordnung nach einem der Ansprüche 1 bis 8,
**dadurch gekennzeichnet, dass** eine Biegelinie zumindest des ersten Kippelements (3) einen Wendepunkt (25) aufweist.

10. Luftfederanordnung nach einem der Ansprüche 1 bis 9,
**dadurch gekennzeichnet, dass** das zumindest erste Kippelement (3) unterhalb der Luftfeder (1) angeordnet ist und das zweite Kippelement (4) oberhalb der Luftfeder (1) angeordnet ist.

11. Luftfederanordnung nach einem der Ansprüche 1 bis 10,
**dadurch gekennzeichnet, dass** die Kippfeder als Konusfeder ausgebildet ist.

12. Luftfederanordnung nach einem der Ansprüche 1 bis 11,
**dadurch gekennzeichnet, dass** die Kippfeder als Notfeder zu der Luftfeder (1) eingesetzt ist.

13. Fahrwerk für ein Schienenfahrzeug mit zumindest einer Luftfederanordnung nach einem der Ansprüche 1 bis 12, **dadurch gekennzeichnet, dass** zumindest ein erstes Kippelement (3) der zumindest einen Luftfederanordnung mit einem Fahrwerksrahmen (21) verbunden ist.

## Claims

1. Pneumatic spring assembly for vehicles, in particular for rail vehicles, having a pneumatic spring, wherein at least one first tilting element (3) is connected to the pneumatic spring (1), wherein the at least one first tilting element (3) is embodied as a pivoted joint, and wherein the pivoted joint has at least one resilient return element, **characterised in that** a second tilting element (4), which is embodied as a tilting spring, is connected to the at least first tilting element (3), wherein the tilting spring is designed as an elastomer metal spring, which has arch-shaped intermediate plates with curvatures which increase in the direction of a longitudinal axis (10) toward the pneumatic spring (1), and/or which has V-shaped intermediate plates with inclinations which increase in the direction of the longitudinal axis (10), toward the pneumatic spring (1), with respect to a first transverse axis (16), as a result of which the at least first tilting element (3) is tilting opposite to the transverse movements of the pneumatic spring (1).

2. Pneumatic spring assembly according to claim 1, **characterised in that** the pivoted joint is embodied as a spherical joint.

3. Pneumatic spring assembly according to claim 1, **characterised in that** the pivoted joint has a preferred tilting direction.

4. Pneumatic spring assembly according to one of claims 1 to 3, **characterised in that** the at least one return element is embodied as a first elastomer layer (11) which is connected to a joint head (9) of the at least first tilting element (3).

5. Pneumatic spring assembly according to one of claims 1 to 4, **characterised in that** at least one profiled sheet is connected to a joint head (9) of the at least first tilting element (3) .

6. Pneumatic spring assembly according to one of claims 1 to 5, **characterised in that** a pneumatic spring force application point (23) is arranged at a distance from a pneumatic spring assembly shear centre (24) in the direction of the longitudinal axis (10), toward the at least first tilting element (3) .

7. Pneumatic spring assembly according to one of claims 1 to 6, **characterised in that** a first transverse rigidity of at least the first tilting element (3) is selected as a function of geometric properties of the pneumatic spring (1).

8. Pneumatic spring assembly according to one of claims 1 to 7, **characterised in that** a tilting element shear centre is arranged in a pneumatic spring bellows shear centre.

9. Pneumatic spring assembly according to one of claims 1 to 8, **characterised in that** a bending line of at least the first tilting element (3) has a turning point (25).

10. Pneumatic spring assembly according to one of claims 1 to 9, **characterised in that** the at least first tilting element (3) is arranged below the pneumatic spring (1) and the second tilting element (4) is arranged above the pneumatic spring (1) .

11. Pneumatic spring assembly according to one of claims 1 to 10, **characterised in that** the tilting spring is embodied as a conical spring.

12. Pneumatic spring assembly according to one of claims 1 to 11, **characterised in that** the tilting spring is used as an emergency spring with respect to the pneumatic spring (1).

13. Running gear for a rail vehicle having at least one pneumatic spring assembly according to one of claims 1 to 12, **characterised in that** at least one first tilting element (3) of the at least one pneumatic spring assembly is connected to a running gear frame (21).

## Revendications

1. Agencement de ressort pneumatique pour des véhicules, en particulier pour des véhicules ferroviaires, avec un ressort pneumatique, dans lequel au moins un premier élément de basculement (3) est relié au ressort pneumatique (1), dans lequel l'au moins un premier élément de basculement (3) est formé en tant qu'articulation de basculement, et dans lequel l'articulation de basculement présente au moins un élément de rappel à effet ressort, **caractérisé en ce qu'**un deuxième élément de basculement (4) est relié à l'au moins premier élément de basculement (3), lequel deuxième élément de basculement est formé en tant que ressort de basculement, dans lequel le ressort de basculement est réalisé en tant que ressort en élastomère-métal, lequel présente des plaques intermédiaires en forme d'arc avec des cintrages allant croissant dans la direction d'un axe longitudinal (10), vers le ressort pneumatique (1), et/ou lequel présente des plaque intermédiaires en forme de V avec des inclinaisons allant croissant par rapport à un premier axe transversal (16), dans la direction d'un axe longitudinal (10), vers le ressort pneumatique (1), moyennant quoi l'au moins premier élément de basculement (3) est basculant à l'opposé de mouvements transversaux du ressort pneumatique (1).

2. Agencement de ressort pneumatique selon la revendication 1, **caractérisé en ce que** l'articulation de basculement est formée en tant qu'articulation sphérique.

3. Agencement de ressort pneumatique selon la revendication 1, **caractérisé en ce que** l'articulation de basculement présente une direction de basculement préférentielle.

4. Agencement de ressort pneumatique selon l'une quelconque des revendications 1 à 3, **caractérisé en ce que** l'au moins un élément de rappel est formé en tant que première couche d'élastomère (11), laquelle est reliée à une tête d'articulation (9) de l'au moins premier élément de basculement (3).

5. Agencement de ressort pneumatique selon l'une quelconque des revendications 1 à 4, **caractérisé en ce qu'**au moins une plaque profilée est reliée à une tête d'articulation (9) de l'au moins premier élément de basculement (3).

6. Agencement de ressort pneumatique selon l'une quelconque des revendications 1 à 5, **caractérisé en ce qu'**un point de prise de force de ressort pneumatique (23) est disposé à distance d'un point central de poussée d'agencement de ressort pneumatique (24) dans la direction de l'axe longitudinal (10), vers l'au moins premier élément de basculement (3).

7. Agencement de ressort pneumatique selon l'une quelconque des revendications 1 à 6, **caractérisé en ce qu'**une première rigidité transversale d'au moins le premier élément de basculement (3) est choisie en fonction de propriétés géométriques du ressort pneumatique (1).

8. Agencement de ressort pneumatique selon l'une quelconque des revendications 1 à 7, **caractérisé en ce qu'**un point central de poussée d'élément de basculement est disposé dans un point central de poussée de soufflet de ressort pneumatique.

9. Agencement de ressort pneumatique selon l'une quelconque des revendications 1 à 8, **caractérisé en ce qu'**une ligne de cintrage d'au moins le premier élément de basculement (3) présente un point tournant (25).

10. Agencement de ressort pneumatique selon l'une quelconque des revendications 1 à 9, **caractérisé en ce que** l'au moins premier élément de basculement (3) est disposé en dessous du ressort pneumatique (1) et le deuxième élément de basculement (4) est disposé au-dessus du ressort pneumatique (1).

11. Agencement de ressort pneumatique selon l'une quelconque des revendications 1 à 10, **caractérisé en ce que** le ressort de basculement est formé en tant que ressort conique.

12. Agencement de ressort pneumatique selon l'une quelconque des revendications 1 à 11, **caractérisé en ce que** le ressort de basculement est mis en œuvre en tant que ressort d'urgence pour le ressort pneumatique (1).

13. Train de roulement pour un véhicule ferroviaire avec au moins un agencement de ressort pneumatique selon l'une quelconque des revendications 1 à 12, **caractérisé en ce qu'**au moins un premier élément de basculement (3) de l'au moins un agencement de ressort pneumatique est relié à un châssis de train de roulement (21).
